# EUROPÄISCHE PATENTANMELDUNG

(11) **EP 1 749 616 A1**
(43) Veröffentlichungstag der Anmeldung: **07.02.2007**
(21) Anmeldenummer: 05107234.6
(22) Anmeldetag: 05.08.2005
(51) Int. Cl.: B23K 35/02, B23K 35/26, B23K 1/005, B23K 9/173, B23K 26/32, B23K 31/02, B23K 10/02, B23K 15/00

(54) **Verfahren zum Lichtbogen- oder Strahllöten/-schweissen von Werkstücken gleicher oder verschiedener Metalle oder Metalllegierungen mit Zusatzwerkstoffen aus Sn-Basis-Legierungen; Draht bestehend aus einer Zinn-Basis-Legierung**

(71) Anmelder: Grillo-Werke AG, D-47169 Duisburg (DE)
(72) Erfinder: Spriestersbach, Jochen, Dr.-Ing., 47058 Duisburg (DE); Wisniewski, Jürgen, 46487 Wesel (DE); Prenger, Frank, Dr.-Ing., 40885 Ratingen (DE)
(74) Vertreter: Sternagel, Fleischer, Godemeyer & Partner

(57) **Zusammenfassung**

Gegenstand der Erfindung ist ein Verfahren zum Lichtbogen- oder Strahl- schweißen/-löten von Werkstücken (A) aus Stahl, Gusseisen, Nickel, Kadmium, Beryllium, Titan, Molybdän, Magnesium, Aluminium, Kupfer, Blei, Zink, Zinn, Hartmetall und deren Legierungen mit Werkstücken (B) aus Stahl, Gusseisen, Nickel, Kadmium, Beryllium, Titan, Molybdän, Magnesium, Aluminium, Kupfer, Blei, Zink, Zinn, Hartmetall und deren Legierungen, wobei die Werkstücke (A) und (B) aus gleichen oder verschiedenen Metallen oder Metalllegierungen bestehen können unter Verwendung einer geschmolzenen Zusatzmetalllegierung, gekennzeichnet durch die folgenden Schritte:
a) Positionieren der zu verbindenden Werkstücke;
b) Aufschmelzen der Zusatzmetalllegierung enthaltend eine SnZn-, SnAg-, SnZnAg-, SnCu-, SnCuAg-, SnZnCu- oder SnZnCuAg- Legierung-;
c) Aufbringen der geschmolzenen Zusatzmetalllegierung auf die Kontaktierungsstellen oder Teilbereiche der Kontaktierungsstellen zwischen den positionierten Werkstücken; und
d) Abkühlen der verbundenen Werkstücke;

wobei die Schritte b) und c) unmittelbar nacheinander durchgeführt werden.

Ein weiterer Gegenstand der Erfindung ist ein Verfahren zum Füllen von Spalten oder Beulen bei der Blechbearbeitung und im Karosseriebau und ein Draht zur Anwendung in dem Verfahren.

## Beschreibung

Gegenstand der Erfindung ist ein Verfahren zum Lichtbogen- oder Strahl- löten/-schweißen von Werkstücken gleicher oder verschiedener Metalle oder Metalllegierungen unter Verwendung einer Sn-Basis-Zusatzmetalllegierung. Es werden Werkstücke aus Stahl, Gusseisen, Nickel, Kadmium, Beryllium, Titan, Molybdän, Magnesium, Aluminium, Kupfer, Blei, Zink, Zinn, Hartmetall und deren Legierungen verschweißt oder verlötet, wobei die zu verbindenden Werkstücke aus gleichen oder ungleichen Metallen oder Metalllegierungen bestehen können.

Ein weiterer Gegenstand der Erfindung ist ein Verfahren zum Füllen von Spalten oder Beulen bei Werkstücken aus Stahl, Gusseisen, Nickel, Kadmium, Beryllium, Titan, Molybdän, Magnesium, Aluminium, Kupfer, Blei, Zink, Zinn, Hartmetall und deren Legierungen.

Ein weiterer Gegenstand der Erfindung ist ein Draht, der in den oben genannten Verfahren verwendet wird.

Im Fahrzeugbau und insbesondere im Automobilbau ist es üblich geworden, beim Karosseriebau eine Vielzahl von Leichtmetallteilen zu verwenden, um so das Gesamtgewicht der Karosserie zu verringern, was sich auf den Gesamtkraftstoffverbrauch positiv auswirkt. In diesem Zusammenhang werden häufig Teile aus Aluminium, Aluminiumlegierungen oder Magnesiumlegierungen eingesetzt. Inzwischen sind sogar Fahrzeuge auf dem Markt, deren Karosserien zu weit mehr als der Hälfte aus diesen Materialien bestehen.

Mit der Änderung der für den Karosseriebau verwendeten Materialien ist auch eine entsprechende Anpassung der Fügeverfahren des Standes der Technik notwendig geworden. Während früher im Karosseriebau im wesentlichen Stahlbleche verbunden werden mussten, müssen jetzt auch Fügeverbindungen zwischen verschiedenen Materialien so zur Verfügung gestellt werden, dass sie in einem industriellen Fertigungsverfahren ohne größere Komplikationen eingesetzt werden können. Insbesondere für die im Leichtbau verwendeten, dünnen Bleche ist dabei die Gefahr des Verzuges des Bauteiles oder das Zerstören von Beschichtungen durch das Einbringen einer großen Wärmemenge während des Fügeprozesses sehr hoch.

Für das Fügen von Stahlblechen wie beispielsweise den häufig im Karosseriebau verwendeten verzinkten Feinblechen, werden im Stand der Technik u.a. das Schutzgasschweißen bzw. das Schutzgaslöten eingesetzt. Derartige Verfahren werden in der DIN1910-2 beschrieben.

Beim Metall-Schutzgas-S*chvireißen* handelt es sich um ein Verfahren, bei dem mittels eines Lichtbogens, der zwischen einer von Schutzgas umströmten Drahtelektrode und dem Werkstück brennt, das Werkstück im zu verschweißenden Bereich aufgeschmolzen wird. Dabei kann die Drahtelektrode Schweißzusatzstoffe enthalten und muss auf den zu verschweißenden Werkstoff abgestimmt werden. Die zu verschweißenden Bereiche der Werkstücke werden so miteinander verbunden.

Beim Strahlschweißen/-löten wird die für den Fügevorgang eingesetzte Energie über Licht-, Laser- oder Elektronenstrahlquellen eingebracht.

Mit diesen Verfahren werden Stähle wie auch Nicht-Eisen-Metalle miteinander verschweißt.

Ein hierzu alternatives Verfahren ist das Metall-Schutzgas-*Löten,* das sich vom Metall-Schutzgasschweißen nur dadurch unterscheidet, dass als Drahtelektrode ein niedriger als die zu verbindenden Grundwerkstoffe schmelzendes Lot eingesetzt wird, so dass der gesamte Vorgang bei niedrigeren Temperaturen durchgeführt werden kann

Dieses auch als "MSG-Löten" bezeichnete Verfahren hat sich insbesondere zum Verbinden von verzinkten Feinblechen in der Automobilindustrie durchgesetzt. Im Vergleich zu dem entsprechenden Schweißverfahren bietet es den Vorteil höherer Prozesssicherheit, besserer Qualität der Lötnähte und sehr guter Verbindungsfestigkeit sowie sehr guter Korrosionsbeständigkeit der verbundenen Metallteile. Als Schweißschutzgase können für dieses Verfahren Edelgase (z.B. Argon) oder Gasgemische mit aktiven Komponenten eingesetzt werden. Diese Gasgemische enthalten Bestandteile, die glättere Lötnähte und gute Nahtübergänge zum Grundwerkstoff erzeugen können. Hierzu wird beispielsweise ein Gemisch von Argon mit geringen Sauerstoff Anteilen verwendet.

Als Lot werden Hart- bzw. Hochtemperaturlote wie beispielsweise Kupferbasisdrähte eingesetzt. Diese bestehen im wesentlichen aus Kupfer mit unterschiedlichen Legierungselementen wie Silizium, Aluminium, Zinn, Nickel, Zink und Mangan. Der Schmelzpunkt der Lote beträgt etwa 950 bis 1400 °C und in diesem Bereich wird auch das entsprechende Verlöten vorgenommen.

Lote mit niedrigeren Schmelzpunkten als bei den Kupferbasisdrähten bestehen z.B. aus Zn-, Al- oder Sn-Basis-Legierungen. Insbesondere SnPb- Legierungen werden bisher beim Flammlöten mit Lötlampe oder Gasbrenner oder mit Lötkolben eingesetzt, wobei bei diesen Verfahren das Füllen von Beulen bzw. das Abdichten von Rissen in Gussteilen im Vordergrund steht. In einer weiteren Anwendung werden diese Lotwerkstoffe für das Ofenlöten im Wärmetauscherbau eingesetzt.

Die nachfolgende Erfindung soll eine Verbesserung des Lichtbogen- oder Strahlschweißen/-löten zur Verfügung stellen, um auch das Verbinden von Werkstoffen untereinander und aus unterschiedlichen Metallen und Metalllegierungen, insbesondere aus Stahl, Gusseisen, Nickel, Kadmium, Beryllium, Titan, Molybdän, Magnesium, Aluminium, Kupfer, Blei, Zink, Zinn, Hartmetall und deren Legierungen zu ermöglichen. Bisher ist die Verbindung dieser Werkstoffe mit Hilfe des Lichtbogen- oder Strahlschweißen/-löten mit Zinn-Basis-Loten nicht beschrieben worden. Mit den erfindungsgemäßen Verfahren und Zusatzwerkstoffen lassen sich auch automatisiert unter niedriger Energiezufuhr Risse abdichten, Spalte zwischen Bauteilen füllen und Beulen ausfüllen.

Die europäische Patentanmeldung EP 1 462 207 A1 offenbart ein Verfahren zum Schutzgasschweißen oder Schutzgaslöten von Werkstücken gleicher oder verschiedener Metalle oder Metalllegierungen mit einem Zn/Al Zusatzmaterial. Durch Verwendung der Zink-Aluminium-Legierung als Lotmaterial kann das Verfahren bei Temperaturen zwischen 350 und 450 °C durchgeführt werden.

Die technische Aufgabe der Erfindung ist es daher, die aus dem Stand der Technik bekannten Lichtbogen- oder Strahlschweiß/-lötverfahren so zu modifizieren, dass sie neben dem Verbinden gleicher Metalle auch für das Verbinden verschiedener Metalle, insbesondere von Stahl, Gusseisen, Nickel, Kadmium, Beryllium, Titan, Molybdän, Magnesium, Aluminium, Kupfer, Blei, Zink, Zinn, Hartmetall und deren Legierungen, geeignet sind, und darüber hinaus auch geeignet sind, dünnwandige, beschichtete oder niedrigschmelzende Werkstoffe durch weitere Verringerung der Schmelztemperatur der verwendeten Legierungen miteinander zu verbinden ohne dabei die Festigkeit der Verbindung wesentlich zu verringern.

Diese technische Aufgabe wird gelöst durch Verfahren zum Lichtbogen- oder Strahlschweißen/-löten von Werkstücken (A) Stahl, Gusseisen, Nickel, Kadmium, Beryllium, Titan, Molybdän, Magnesium, Aluminium, Kupfer, Blei, Zink, Zinn, Hartmetall und deren Legierungen mit Werkstücken (B) aus Stahl, Gusseisen, Nickel, Kadmium, Beryllium, Titan, Molybdän, Magnesium, Aluminium, Kupfer, Blei, Zink, Zinn, Hartmetall und deren Legierungen, wobei die Werkstücke (A) und (B) aus gleichen oder verschiedenen Metallen oder Metalllegierungen bestehen können unter Verwendung einer geschmolzenen Zusatzmetalllegierung, gekennzeichnet durch die folgenden Schritte:
a) Positionieren der zu verbindenden Werkstücke, zum Beispiel auf Stoß oder überlappend;
b) Aufschmelzen der Zusatzmetalllegierung enthaltend eine SnZn-, SnAg-, SnZnAg-, SnCu-, SnCuAg-, SnZnCu- oder SnZnCuAg- Legierung;
c) Aufbringen der geschmolzenen Zusatzmetalllegierung auf die Kontaktierungsstellen oder Teilbereiche der Kontaktierungsstellen zwischen den positionierten Werkstücken; und
d) Abkühlen der verbundenen Werkstücke;
wobei die Schritte b) und c) untermittelbar nacheinander durchgeführt werden.

Ein oder mehrere der Schritte a) bis d) können unter Einsatz von Schutzgas erfolgen. Als Schutzgas im Sinne der Erfindung können solche Gase oder Gasgemische eingesetzt werden, die während des Verfahrens keinerlei Reaktion mit der Zusatzmetalllegierung oder mit dem Material der Werkstücke eingehen. In bevorzugter Weise werden hierzu Edelgase verwendet, insbesondere Argon. Zum anderen können aber auch Gasgemische aus Schutzgasen mit aktiven Gasen eingesetzt werden, die den Prozess bzw. die Legierungsbildung beeinflussen. Hierzu gehören beispielsweise Gasgemische aus Argon und geringen Anteilen Sauerstoff oder Kohlendioxid.

Durch den Einsatz der Zinn-Basis-Legierungen als Zusatzmetalllegierung ist es möglich, Werkstücke aus unterschiedlichen metallischen Werkstoffen in einem Ein-Schritt-Prozess, der auch kontinuierlich und automatisiert durchgeführt werden kann, miteinander zu verbinden. Aufgrund der niedrigeren Schmelztemperatur der Zinn-Basis-Legierung, die im Bereich von 150 °C bis 400 °C, bervorzugt im Bereich von 180 °C bis 350 °C und besonders bevorzugt im Bereich von 200 °C bis 300 °C liegt, ist es möglich, das gesamte Verfahren bei niedrigeren Temperaturen durchzuführen als bisherige Schutzgaslötverfahren, die bei etwa 1000°C durchgeführt wurden. Hierdurch erfolgt ein erheblich geringerer Verzug der Bauteile, da bei insgesamt niedrigerer Temperatur gearbeitet werden kann. Dadurch wird es insbesondere auch möglich, sehr dünne oder beschichtete Materialien, wie Bänder oder Bleche aus Stahl, Gusseisen, Nickel, Kadmium, Beryllium, Titan, Molybdän, Magnesium, Aluminium, Kupfer, Blei, Zink, Zinn, Hartmetall und deren Legierungen von einer Dicke kleiner 1 mm zu verbinden. Die niedrigere Temperatur spart weiterhin auch erhebliche Energiekosten für den Lötvorgang. Aufgrund der guten Spaltfüllung der Lotwerkstoffe auf Sn-Basis lassen sich Fugen und Beulen sehr gut schließen.

Ein weiterer Vorteil ist, dass Stahlteile, sofern sie als verzinkte Stahlbleche eingesetzt werden, aufgrund der niedrigeren Temperatur in ihrer Verzi n-kung nicht beschädigt werden, der Korrosionsschutz im Bereich der Schweißnaht bzw. Lötnaht erhalten bleibt und somit aufwendige Nacharbeiten zum Erhalt des Korrosionsschutzes entfallen. Es können z.B. feuerverzinkte Stahlbleche mit einer Dicke unter 1 mm, z.B. zwischen 0,3 bis 1,0 mm, eingesetzt werden.

Zink besitzt einen Schmelzpunkt von 419 °C und einen Siedepunkt von 908 °C. Dies bedeutet, dass bei Löttemperaturen im Bereich von 1000 °C ein größerer Anteil der Verzinkung des Stahlbleches verdampft. Dies stört zum einen den Fügeprozess und die Festigkeit der Fügeverbindung und führt zum anderen zu einer Verminderung des Korrosionsbeständigkeit des Stahlblechs, die ja durch die Verzinkung erreicht werden soll und während des Fügeprozesses zerstört wird. Durch das erfindungsgemäße Verfahren erfolgt das Fügen bei erheblich niedrigeren Temperaturen, z.B. im Bereich zwischen 200 und 300 °C, so dass dieses Problem nicht auftreten kann.

Ein weiterer Vorteil des erfindungsgemäßen Verfahrens ist, dass durch die niedrigen Schmelztemperaturen der verwendeten Legierungen auch niedrigschmelzende Grundwerkstoffe wie z.B. im Baubereich verwendete Zinkbleche verbunden werden können. Darüber hinaus können auch empfindliche oder kaschierte Werkstoffe gefügt werden.

Ein weiterer Vorteil besteht darin das z.B. Nickel- Beryllium- oder Titanbasiswerkstoffe ohne aggressive Flussmittel verlötet werden können.

Es wurde weiterhin festgestellt, dass die so hergestellte Lötverbindung hohe Festigkeiten und eine gute Korrosionsbeständigkeit aufweist.

In einer bevorzugten Ausführungsform werden für das Verfahren Werkstücke aus Stahl eingesetzt, die aus verzinktem oder unverzinktem Stahl bestehen. Häufig werden heutzutage im Fahrzeugbau dünne und verzinkte Feinbleche eingesetzt, mit der die Lebensdauer der Fahrzeuge verlängert werden soll. Heute beträgt der durchschnittliche Anteil dieser Bleche im Karosseriebau über 70 %. Als Folge davon, geben die meisten Kraftfahrzeughersteller mittlerweile Garantiezeiten von bis zu 12 Jahren gegen Durchrostung.

In einer bevorzugten Ausführungsform bestehen die metallischen Werkstoffe aus Stahl, Gusseisen, Nickel, Kadmium, Beryllium, Titan, Molybdän, Magnesium, Aluminium, Kupfer, Blei, Zink, Zinn, Hartmetall und deren Legierungen. Insbesondere bevorzugt sind Aluminium und Aluminiumlegierungen und Aluminium-Magnesium-Legierungen, die heutzutage häufig im Kraftfahrzeugbau verwendet werden. Sie besitzen gute mechanische Eigenschaften und führen aufgrund ihres geringen spezifischen Gewichtes zu einer Verringerung des Karosseriegesamtgewichtes und damit zu einer Verringerung des Kraftstoffverbrauches.. In einer besonders bevorzugten Ausführungsform sollen Werkstoffe aus Stahl, insbesondere verzinktem Stahl mit Werkstoffen aus Aluminium, Aluminiumlegierungen, Magnesium, Magnesiumlegierungen und Zink und Zinklegierungen verbunden werden. In bevorzugter Weise wird hierzu eine binäre Zinn-Basis-Legierung mit Zink oder Kupfer, i.e. SnZn- bzw. SnCu-Legierung, oder eine Dreistofflegierung aus dem System SnZnCu eingesetzt.

In einer bevorzugten Ausführungsform können mit diesem Verfahren besonders im Bauwerksbedachungsbereich Zink und Zinklegierungen miteinander verbunden werden.

In einer besonders bevorzugten Ausführungsform erfolgt das Verbinden der Werkstücke mittels des Lichtbogenschweiß/-lötverfahrens oder des Strahlschweiß/-lötverfahrens.

Bei diesen Verfahren handelt es sich um Verfahren bei denen ein Lot mittels eines Lichtbogens oder Plasmas oder einer Laser- oder Lichtquelle geschmolzen wird und das flüssige Lot auf die zu verschweißende/zu verlötende Stellen aufgebracht wird. Entsprechende Verfahren sind als Lichtbogenschweiß/lötverfahren, Plasmaschweiß/-lötverfahren, Laser-/Lichtstrahlschweiß/-lötverfahren oder WIG-Schweiß/-Lötverfahren bekannt, wobei im Falle des erfindungsgemäßen Verfahrens die Besonderheit besteht, dass diese Verfahren unter Verwendung eines Zinn-Basis-Lotes durchgeführt werden.

Das Schutzgasschweiß/-lötverfahren ist besonders bevorzugt. Der Lichtbogen brennt dabei zwischen einer Drahtelektrode und dem Werkstück. Die Drahtelektrode ist umgeben von einer Schutzgasdüse, aus der Schutzgas auf die zu verbindende Stelle geleitet wird. Die Drahtelektrode besteht aus der Zusatzmetalllegierung und ist damit das Lot, mit dem das Werkstück verbunden wird. Dieses Verfahren ermöglicht das kontinuierliche Verbinden von Metallmaterialien in einem einschrittigen Durchlaufverfahren. Dies hat unter anderem den Vorteil, dass hohe Verarbeitungsgeschwindigkeiten erzielt werden können. Das Aufschmelzen der Zusatzmetalllegierung erfolgt vorzugsweise durch den elektrischen Lichtbogen, der zwischen der Drahtelektrode und dem Werkstück brennt. Bei dem erfindungsgemäßen Verfahren wird im Falle des Verbindens von Stahl mit Leichtmetallen wie Aluminium oder Magnesium und deren Legierungen die Leichtmetalle teilweise angeschmolzen. Weiterhin wird ein Lot verwendet, so dass es sich um ein kombiniertes Schweiß-Lötverfahren handelt.

Ein weiterer Vorteil des Lichtbogen- oder Strahlschweißen/-löten ist, dass ein Erwärmen des gesamten Bauteils, wie es beim Ofenlöten der Fall ist, nicht notwendig ist. Die Nachteile des Ofenlötens, wie z.B. hoher Aufwand hi n-sichtlich des exakten Positionierens unter Temperatur, Gefahr von Verzug und Oxidation, werden somit vermieden.

Das erfindungsgemäße Verfahren kann mit oder ohne Flussmittel durchgeführt werden. Der Einsatz eines Flussmittels erfolgt üblicherweise, um beim Löten das Schmelzen des Lotes zu erleichtern, die Abscheidung einzelner Stoffe zu fördern bzw. die Oxidation zu verhindern. Insbesondere bei Aluminium wird in der Regel ein Flussmittel verwendet, um die hinderliche Oxidschicht zu entfernen. Der Einsatz von Flussmitteln hat aber den Nachteil, dass die meisten Flussmittel sehr aggressiv sind und das Aluminium nach dem Verbinden mit anderen Metallen zur Korrosion bringt. Es sind daher zusätzliche Schritte notwendig, um die Flussmittel nach dem thermischen Verbinden wieder zu beseitigen. Überraschenderweise hat sich gezeigt, dass das erfindungsgemäße Verfahren vollständig ohne Flussmittel durchgeführt werden kann, und dass trotzdem feste und haltbare Verbindungen zwischen den zu verbindenden Wertstoffen erzeugt werden können. Dies ist umso erstaunlicher, als dass gerade beim Verbinden von verschiedenen Metallen, beispielsweise aus Stahl-, Aluminium- oder Magnesiumlegierungen, äußerst spröde intermetallische Phasen entstehen können, die zu einer mangelnden Festigkeit der Verbindung führen. Offensichtlich wird die Bildung dieser intermetallischen Phasen gerade durch die erheblich geringere Temperatur, die für das erfindungsgemäße Verfahren notwendig ist, vermieden und hierdurch eine festere Verbindung erhalten.

In bevorzugter Weise werden als Zusatzmetalllegierungen solche Zinn-Basis-Legierungen verwendet, die neben den üblichen Verunreinigungen bis 55 Gew.-% Zink und/oder bis 5 Gew.-% Kupfer und/oder bis 5 Gew.-% Ag enthalten. Besonders bevorzugt sind Zinnlegierungen, die 10 bis 55 Gew.-% Zink enthalten, ganz besonders bevorzugt sind solche, die 20 bis 52 Gew.-% Zink enthalten. Bevorzugt sind auch Zinnlegierungen, die 2 bis 4 Gew.-% Kupfer oder die 5 bis 10 Gew.-% Zink und 2 bis 4 Gew.-% Kupfer enthalten. Im einzelnen können die folgenden Zinnlegierungen eingesetzt werden: SnZn20, SnZn30, SnZn52, SnCu3 und SnZn7Cu3.

Diese Zinn-Basis-Legierung kann neben den üblichen Verunreinigungen weiterhin einen oder mehrere Legierungszusätze enthalten, insbesondere bis 5 Gew.-% Ti, bis 5 Gew.-% Sb, bis 2000 ppm Li, bis 5000 ppm Bi, bis 5000 ppm Ce und bis 5000 ppm Ga.

Die Zusatzmetalllegierung wird für das erfindungsgemäße Verfahren in Form eines Massiv- oder Fülldrahtes eingesetzt. Falls ein Fülldraht verwendet wird, kann die Seele dieses Fülldrahtes entsprechende Zusatzstoffe, die für das Verlöten notwendig sind, enthalten. Zusatzstoffe können beispielsweise Flussmittel, oder Metallpulver ausgewählt aus der Gruppe umfassend Aluminium, Chrom, Titan, Mangan und Nickel sein.

Das erfindungsgemäße Verfahren wird in bevorzugter Weise so durchgeführt, dass die von Schutzgas umströmte Drahtelektrode aus der Zinn-Basis-Legierung im Lichtbogen, Plasma oder Laser oder Licht aufgeschmolzen wird und die aufgeschmolzene Zusatzmetalllegierung auf die positionierten Werkstücke an den entsprechenden Kontaktierungsstellen oder Teilbereichen der Kontaktierungsstellen aufgebracht wird. Dies erfolgt unmittelbar nach dem Aufschmelzen der Zusatzmetalllegierung.

Das erfindungsgemäße Verfahren ermöglicht aufgrund der hohen Auftragsleistung darüber hinaus auf einfache Weise das Füllen von Spalten und Beulen bei der Blechbearbeitung und im Karosseriebau. Eine Nachbearbeitung der reparierten Bereiche ist aufgrund der geringen Härte der verwendeten Legierungen gut möglich.

Ein weiterer Gegenstand der Erfindung ist daher ein Verfahren zum Füllen von Spalten oder Beulen bei der Blechbearbeitung und im Karosseriebau durch Lichtbogen- oder Strahl -schweißen/ -löten für Werkstücke aus Stahl, Gusseisen, Nickel, Kadmium, Beryllium, Titan, Molybdän, Magnesium, Aluminium, Kupfer, Blei, Zink, Zinn, Hartmetall und deren Legierungen unter Verwendung einer geschmolzenen Zusatzmetalllegierung, gekennzeichnet durch die folgenden Schritte:
a) Aufschmelzen der Zusatzmetalllegierung enthaltend eine SnZn-, SnAg-, SnZnAg-, SnCu-, SnCuAg-, SnZnCu- oder SnZnCuAg- Legierung;
b) Aufbringen der geschmolzenen Zusatzmetalllegierung in die Spalten oder in Beulen der Werkstücke und, optional, Glattstreichen des Zusatzwerkstoffes; und
c) Abkühlen der Werkstücke;
wobei die Schritte a) und b) unmittelbar nacheinander durchgeführt werden.

Bevorzugte Ausführungsformen des Verfahrens zum Füllen von Spalten oder Beulen entsprechen in ihrer Durchführung und Spezifikation der verwendeten Mittel den zuvor beschriebenen Ausführungsformen des erfindungsgemäßen Verfahren zum Lichtbogen- oder Strahl- schweißen/-löten.

Darüber hinaus ist ein weiterer Gegenstand der Erfindung ein Draht mit einem Durchmessers von 0,8 bis 3,2 mm zur Anwendung als Zusatzwerkstoff in einem der oben genannten Verfahren bestehend aus einer Zinn-Basis-Legierung mit einem Anteil bis 55 Gew.-% Zink und/oder einem Anteil bis 5 Gew.-% Kupfer und/oder bis 5 Gew.-% Ag.

In einer bevorzugten Ausführungsform des Drahtes kann die Zinn-Basis-Legierung, i.e. Zinn-Zink-, Zinn-Kupfer oder Zinn-Zink-Kupfer-Legierung neben den üblichen Verunreinigungen, einzeln oder in Kombination einen oder mehrere der nachfolgenden Legierungszusätze enthalten: bis 5 Gew.-% Ti, bis 5 Gew.-% Sb, bis 2000 ppm Li, bis 5000 ppm Bi, bis 5000 ppm Ce und bis 5000 ppm Ga.

Bei dem Draht kann es sich in bevorzugter Weise um einen Massivdraht oder einen Fülldraht handeln.

Die nachfolgenden Beispiele sollen die Erfindung näher darstellen.

### Beispiele

Es wurden Versuche zur Herstellung von Lötverbindungen von feuerverzinkten Stahlblechen mittels Schutzgasschweißen und verschiedenen Zinn-Basis-Loten durchgeführt.

Als Grundwerkstoff wurden feuerverzinkte Stahlbleche einer Dicke von 0,7 bis 1 mm eingesetzt. In einer Versuchsreihe wurden als Lotwerkstoffe ein SnZn20-, ein SnZn52- und ein SnCu3-Lotdraht eines Durchmessers von 1,6 mm als Massivdraht eingesetzt. Zum Vergleich wurde auch ein ZnAl4Cu1,5-Lotdraht aus dem Stand der Technik (EP 1 462 207 A1) eingesetzt. Als Schutzgas wurde Argon verwendet.

Der Anstellwinkel betrug 45 bis 80° und die Neigung des Brenners (elektrischer Lichtbogen beim Brenner) betrug 60 bis 90°. Der Brennerabstand zu den zu verbindenden Werkstücken betrug 10 bis 25 mm an der Schutzgasdüse und die Verfahrgeschwindigkeit beim Verlöten betrug 0,3 bis 1,3 m/min.

Es wurde festgestellt, dass sich mit diesen Parametern reproduzierbar Verbindungen zwischen den Stahlteilen mit einer gleichmäßigen Schweiß-/Lötnahtausbildung erzeugen lassen, wobei die Naht eine glatte, gleichmäßige Oberfläche mit einer guten Anbindung zum Grundwerkstoff hat. Die anschließende Untersuchung der mechanisch-technologischen Eigenschaften zeigte, dass die Kräfte mit denen der Nahtquerschnitt bis zum Bruch belastet werden kann, vergleichbar sind mit denen, die beim Löten mit Zn-Basiszusatzwerkstoffen erzielt werden. Bezüglich weiterer Versuchsparameter und der erzielten Ergebnisse siehe Tabelle 1.

**Tabelle 1**

| Nr. | Probenbreite bO [mm] | Dicke aO [mm] | Verbindung/Lot | Meßlänge LO [mm] | Kraft Fm [N] | Dehnung A ges mm [mm] |
|---|---|---|---|---|---|---|
| 1 | 44,91 | 1 | St-St-SnCu3 | 95 | 5862,30 | 3,38 |
| 2 | 44,91 | 1 | St-St-SnZn20 | 95 | 5407,93 | 2,41 |
| 3 | 44,9 | 1 | St-St-SnZn52 | 95 | 5413,32 | 1,85 |
| 4 | 44,12 | 1 | St-St-ZnAl4Cu1,5 | 48 | 5832,45 | 1,53 |

Die obigen Ergebnisse zeigen, dass mit dem erfindungsgemäßen Verfahren zum Beispiel feste und korrosionsbeständige Verbindungen zwischen Werkstoffen aus Stahl bei niedrigen Temperaturen erzeugt werden können.

In einer weiteren Versuchsreihe wurden Spalte zwischen Bauteilen mit einer Spaltweite von 2 mm mit einem Zusatzwerkstoff SnZn7Cu3 durch MSG-Verfahren gefüllt.

## Patentansprüche

1. Verfahren zum Lichtbogen- oder Strahl- schweißen/-löten von Werkstücken (A) aus Stahl, Gusseisen, Nickel, Kadmium, Beryllium, Titan, Molybdän, Magnesium, Aluminium, Kupfer, Blei, Zink, Zinn, Hartmetall und deren Legierungen mit Werkstücken (B) aus Stahl, Gusseisen, Nickel, Kadmium, Beryllium, Titan, Molybdän, Magnesium, Aluminium, Kupfer, Blei, Zink, Zinn, Hartmetall und deren Legierungen, wobei die Werkstücke (A) und (B) aus gleichen oder verschiedenen Metallen oder Metalllegierungen bestehen können unter Verwendung einer geschmolzenen Zusatzmetalllegierung, **gekennzeichnet durch** die folgenden Schritte:
a) Positionieren der zu verbindenden Werkstücke;
b) Aufschmelzen der Zusatzmetalllegierung enthaltend eine SnZn-, SnAg-, SnZnAg-, SnCu-, SnCuAg-, SnZnCu- oder SnZnCuAg- Legierung-;
c) Aufbringen der geschmolzenen Zusatzmetalllegierung auf die Kontaktierungsstellen oder Teilbereiche der Kontaktierungsstellen zwischen den positionierten Werkstücken; und
d) Abkühlen der verbundenen Werkstücke;
wobei die Schritte b) und c) unmittelbar nacheinander durchgeführt werden.

2. Verfahren nach Anspruch 1, **dadurch gekennzeichnet, dass** die Werkstücke aus Stahl aus verzinktem oder unverzinktem Stahl oder beschichtetem Material bestehen.

3. Verfahren nach einem oder mehreren der Ansprüche 1 oder 2, **dadurch gekennzeichnet, dass** das Aufschmelzen der Zusatzmetalllegierung im elektrischen Lichtbogen oder mittels Plasmaverfahren oder mittels Laser oder Licht erfolgt.

4. Verfahren nach einem oder mehreren der Ansprüche 1 bis 3, **dadurch gekennzeichnet, dass** das Verbinden der Werkstücke unter Einsatz eines Flussmittels erfolgt.

5. Verfahren nach einem oder mehreren der Ansprüche 1 bis 4, **dadurch gekennzeichnet, dass** das ein oder mehrere der Schritte a) bis d) unter Einsatz von Schutzgas erfolgt.

6. Verfahren nach einem oder mehreren der Ansprüche 1 bis 5, **dadurch gekennzeichnet, dass** die Sn-Basis-Legierung bis 55 Gew.-% Zink und/oder bis 5 Gew.-% Kupfer und/oder bis 5 Gew.-% Ag enthält.

7. Verfahren nach Anspruch 6, **dadurch gekennzeichnet, dass** die Sn-Basis Legierung einzeln oder in Kombination eine oder mehrere der nachfolgenden Legierungszusätze enthalten kann: bis 5 Gew.-% Ti, bis 5 Gew.-% Sb, bis 2000 ppm Li, bis 5000 ppm Bi, bis 5000 ppm Ce und bis 5000 ppm Ga.

8. Verfahren nach einem oder mehreren der Ansprüche 1 bis 7, **dadurch gekennzeichnet, dass** die Zusatzmetalllegierung in Form eines Massiv- oder Fülldrahtes eingesetzt wird.

9. Verfahren zum Füllen von Spalten oder Beulen bei der Blechbearbeitung und im Karosseriebau durch Lichtbogen- oder Strahl -schweißen/ -löten für Werkstücke aus Stahl, Gusseisen, Nickel, Kadmium, Beryllium, Titan, Molybdän, Magnesium, Aluminium, Kupfer, Blei, Zink, Zinn, Hartmetall und deren Legierungen unter Verwendung einer geschmolzenen Zusatzmetalllegierung, **gekennzeichnet durch** die folgenden Schritte:
a) Aufschmelzen der Zusatzmetalllegierung enthaltend eine SnZn-, SnAg-, SnZnAg-, SnCu-, SnCuAg-, SnZnCu- oder SnZnCuAg- Legierung;
b) Aufbringen der geschmolzenen Zusatzmetalllegierung in die Spalten oder in Beulen der Werkstücke und, optional, Glattstreichen des Zusatzwerkstoffes; und
c) Abkühlen der Werkstücke;
wobei die Schritte a) und b) unmittelbar nacheinander durchgeführt werden.

10. Verfahren nach Anspruch 9, **dadurch gekennzeichnet, dass** die Werkstücke aus Stahl aus verzinktem oder unverzinktem Stahl oder beschichtetem Material bestehen.

11. Verfahren nach einem oder mehreren der Ansprüche 9 oder 10, **dadurch gekennzeichnet, dass** das Aufschmelzen der Zusatzmetalllegierung im elektrischen Lichtbogen oder mittels Plasmaverfahren oder mittels Laser oder Licht erfolgt.

12. Verfahren nach einem oder mehreren der Ansprüche 9 bis 11, **dadurch gekennzeichnet, dass** das Verfahren unter Einsatz eines Flussmittels erfolgt.

13. Verfahren nach einem oder mehreren der Ansprüche 9 bis 12, **dadurch gekennzeichnet, dass** ein oder mehrere der Schritte a) bis c) unter Einsatz von Schutzgas erfolgt.

14. Verfahren nach einem oder mehreren der Ansprüche 9 bis 13, **dadurch gekennzeichnet, dass** die Sn-Basis-Legierung bis 55 Gew.-% Zink und/oder bis 5 Gew.-% Kupfer und/oder bis 5 Gew.-% Ag enthält.

15. Verfahren nach Anspruch 14, **dadurch gekennzeichnet, dass** die Sn-Basis Legierung einzeln oder in Kombination eine oder mehrere der nachfolgenden Legierungszusätze enthalten kann: bis 5 Gew.-% Ti, bis 5 Gew.-% Sb, bis 2000 ppm Li, bis 5000 ppm Bi, bis 5000 ppm Ce und bis 5000 ppm Ga.

16. Verfahren nach einem oder mehreren der Ansprüche 9 bis 15, **dadurch gekennzeichnet, dass** die Zusatzmetalllegierung in Form eines Massiv- oder Fülldrahtes eingesetzt wird.

17. Draht eines Durchmessers von 0,8 bis 3,2 mm zur Anwendung als Zusatzwerkstoff in einem der Verfahren der Ansprüche 1 bis 16 bestehend aus einer Zinn-Basis-Legierung mit einem Anteil bis 55 Gew.-% Zink und/oder einem Anteil bis 5 Gew.-% Kupfer und/oder bis 5 Gew.-% Ag.

18. Draht nach Anspruch 17, **dadurch gekennzeichnet, dass** die SnZn-, SnAg-, SnZnAg-, SnCu-, SnCuAg-, SnZnCu- oder SnZnCuAg- Legierung neben den üblichen Verunreinigungen einzeln oder in Kombination eine oder mehrere der nachfolgenden Legierungszusätze enthalten kann: bis 5 Gew.-% Ti, bis 5 Gew.-% Sb, bis 2000 ppm Li, bis 5000 ppm Bi, bis 5000 ppm Ce und bis 5000 ppm Ga.

19. Draht nach Anspruch 17 oder 18, **dadurch gekennzeichnet, dass** es ein Massivdraht oder ein Fülldraht ist.
